# EUROPÄISCHE PATENTSCHRIFT

(11) **EP 3 615 801 B1**
(45) Veröffentlichungstag und Bekanntmachung des Hinweises auf die Patenterteilung: **10.11.2021**
(21) Anmeldenummer: 18719904.7
(22) Anmeldetag: 27.04.2018
(51) Int. Cl.: C09J 7/38, C09J 7/40, F04B 39/02, F04B 39/12

(54) **KÄLTEMITTELVERDICHTER**
REFRIGERANT COMPRESSOR
COMPRESSEUR RÉFRIGÉRANT

(30) Priorität: 28.04.2017 AT 5007917 U
(43) Veröffentlichungstag der Anmeldung: 04.03.2020
(73) Patentinhaber: Secop GmbH, 24939 Flensburg (DE)
(72) Erfinder: SCHWEIGHOFER, Alfred, 8292 Neudau (AT); KRISPEL, Wilhelm, 8280 Fürstenfeld (AT)
(74) Vertreter: KLIMENT & HENHAPEL
(86) Internationale Anmeldenummer: PCT/EP2018/060877
(87) Internationale Veröffentlichungsnummer: WO 2018/197670

(56) Entgegenhaltungen:
- EP-A1- 2 657 524
- WO-A1-2008/052297
- US-A1- 2016 017 871

## Beschreibung

### GEBIET DER ERFINDUNG

Die Erfindung betrifft einen Kältemittelverdichter mit einem, vorzugsweise hermetisch abdichtbaren, Verdichtergehäuse; einer elektrischen Antriebseinheit umfassend einen Rotor und einen Stator; einer mit dem Rotor drehfest verbundenen, eine Längsachse aufweisenden Kurbelwelle und einer von der Kurbelwelle antreibbaren Kolben-Zylinder-Einheit, wobei die elektrische Antriebseinheit als Außenläufermotor ausgebildet ist und der Rotor ein sich zumindest abschnittsweise radial zur Längsachse nach außen erstreckendes Trägerelement aufweist und das Trägerelement drehfest an der Kurbelwelle angebunden ist.

### STAND DER TECHNIK

Kältemittelverdichter, insbesondere hermetisch gekapselte Kältemittelverdichter, sind seit langem bekannt und kommen vorwiegend in Kühlmöbeln, wie Kühlschränken oder -regalen, zum Einsatz. Der Kältemittelprozess als solches ist ebenfalls seit langem bekannt. Kältemittel wird dabei durch Energieaufnahme aus dem zu kühlenden Raum in einem Verdampfer erhitzt und schließlich überhitzt und mittels des Kältemittelverdichters, auch Kältemittelkompressor genannt, durch eine Kolben-Zylinder-Einheit durch einen sich in einem Zylindergehäuse translatorisch bewegenden Kolben auf ein höheres Druckniveau gepumpt, wo das Kältemittel Wärme über einen Kondensator abgibt und über eine Drossel, in der eine Druckreduzierung und die Abkühlung des Kältemittels erfolgt, wieder zurück in den Verdampfer befördert wird. Die Bewegung des Kolbens wird über einen von einer elektrischen Antriebseinheit angetriebenen Kurbeltrieb umfassend eine Kurbelwelle realisiert. Ein solcher Kältemittelverdichter mit einem elektrischen Motor, der einen Stator und einen Rotor aufweist, der als Außenläufer ausgebildet ist, ist z.B. aus der Druckschrift DE 10 2010 051 266 bekannt.

Die als Außenläufermotor ausgebildete elektrische Antriebseinheit umfasst einen Stator, der in der Regel aus einem Blechpaket und Drahtwicklungen gebildet wird, und bezogen auf die Längsachse radial innen, also näher an der Kurbelwelle, liegt. Darüberhinaus umfasst die Antriebseinheit einen Rotor, der bezogen auf die Längsachse außen angeordnet ist und den Stator außen zumindest abschnittsweise umgreift. Ein Trägerelement dient dabei als Verbindung zwischen den elektromagnetischen Bestandteilen des Rotors, beispielsweise über den Umfang verteilte, durch einen Kurzschlussring miteinander verbundene Permanentmagnete, und dem Kurbeltrieb, insbesondere der Kurbelwelle. Das Trägerelement ist drehfest, also form-, reib oder stoffschlüssig mit dem Kurbeltrieb, insbesondere mit der Kurbelwelle, verbunden, um den Kurbeltrieb durch die elektromagnetische Wechselwirkung zwischen Rotor und Stator während des Betriebs anzutreiben. Das Trägerelement ist in der Regel mit einem der Kolben-Zylinder-Einheit abgewandten Endabschnitt der Kurbelwelle verbunden und erstreckt sich von der Kurbelwelle bezogen auf die Längsachse radial nach außen. In anderen Worten ist das Trägerelement mit einem freien, dem der Kolben-Zylinder-Einheit abgewandten Abschnitt der Kurbelwelle verbunden, während ein Großteil der Kurbelwelle in einer Lagerbuchse gelagert ist. Dabei untergreift das Trägerelement üblicherweise den Stator bzw. ist das Trägerelement zwischen der dem Ölsumpf zugewandten Seite des Stators und dem Ölsumpf angeordnet.

Üblicherweise ist die Antriebseinheit entweder als Asynchronmotor ausgebildet, wobei der Stator ein Blechpaket und/oder Kupfer- oder Aluminiumdrahtwicklungen umfasst und der Rotor ein Blechpaket und Aluminiumstegen mit Aluminiumkurzschlussringen umfasst, oder als Synchronmotor ausgebildet, wobei der Stator ein Blechpaket und/oder Kupfer- oder Aluminiumdrahtwicklungen umfasst und der Rotor eine Mehrzahl an Permanentmagneten umfasst.

Um die Kolben-Zylinder-Einheit und den Kurbeltrieb, insbesondere die Kurbelwelle, während des Betriebs zu schmieren, ist ein Schmiermittel-Fördersystem vorgesehen, mittels dessen während des Betriebs des Kältemittelverdichters Schmiermittel aus einem sich in einem Bodenbereich des Verdichtergehäuses während des Betriebszustandes ausbildenden Schmiermittelsumpf in Richtung der Kolben-Zylinder-Einheit gefördert wird.

Das Schmiermittel-Fördersystem ist im Allgemeinen zumindest teilweise durch die Kurbelwelle selbst ausgebildet, wobei die Kurbelwelle an dem der Kolben-Zylinder-Einheit gegenüberliegenden Ende, vorzugsweise an einer Stirnfläche der Kurbelwelle, zumindest eine axiale Bohrung und/oder eine Exzenterbohrung aufweist, durch welche Schmiermittel aufgrund der Zentrifugalkraft bei der Rotation der Kurbelwelle in Richtung der Kolben-Zylinder-Einheit gefördert wird. Zusätzlich dazu oder alternativ dazu weist die Kurbelwelle oftmals eine an der Umfangsfläche in einem Mittelabschnitt ausgebildete Wendelnut auf, welche das Schmiermittel an der Umfangsfläche nach oben fördert und mit der axialen Bohrung und/oder der Exzenterbohrung verbunden ist.

Ein Nachteil des Stands der Technik äußert sich darin, dass durch die zu überwindende Förderhöhe des Schmiermittels, insbesondere beim Abgreifen des Schmiermittels aus dem Schmiermittelsumpf, die gesamte Förderleistung des Schmiermittel-Fördersystems verringert wird. Diese Reduktion der Förderleistung resultiert aus der mit zunehmender Förderhöhe abnehmenden Menge an Schmiermittel die mittels einer auf der Zentrifugalkraft basierenden Förderung gefördert werden kann.

### AUFGABE DER ERFINDUNG

Es ist daher eine Aufgabe der gegenständlichen Erfindung die Nachteile des Stands der Technik zu überwinden und einen Kältemittelverdichter mit einer als Außenläufermotor ausgebildeten Antriebseinheit vorzuschlagen, der eine erhöhte Förderleistung von Schmiermittel aus einem Schmiermittelsumpf ermöglicht bei vorzugsweise geringer bzw. reduzierter Bauhöhe des Kompressors.

### DARSTELLUNG DER ERFINDUNG

Um Schmiermittel in eine parallel zu einer Längsachse der Kurbelwelle oder geneigt zur Längsachse verlaufenden Bohrung, vorzugsweise eine exzentrisch zur Längsachse angeordnete Exzenterbohrung, der Kurbelwelle einzuführen, ohne dass das der Kolben-Zylinder-Einheit gegenüberliegende Ende der Kurbelwelle weit über den Rotor vorsteht und ohne dass das der Kolben-Zylinder-Einheit gegenüberliegende Ende der Kurbelwelle in den Schmiermittelsumpf eintaucht, ist eine hülsenförmige Schmiermittelaufnahme nicht an der Kurbelwelle selbst sondern am Trägerelement drehfest angebunden. Durch die Befestigung der Schmiermittelaufnahme an dem Trägerelement rotiert die Schmiermittelaufnahme im Betriebszustand gemeinsam mit der Kurbelwelle, da das Trägerelement selbst drehfest an der Kurbelwelle angebunden ist.

Die hülsenförmige Schmiermittelaufnahme taucht im Betriebszustand in den Ölsumpf ein, wobei Schmiermittel, beispielsweise über eine Schmiermitteleintrittsöffnung, in die Schmiermittelaufnahme eintreten kann. Üblicher Weise ist die Schmiermittelaufnahme aus einem metallischen Werkstoff oder aus einem Kunststoff hergestellt. Durch die Hülsenform der Schmiermittelaufnahme, also die Ausbildung der Schmiermittelaufnahme als Hohlkörper in dem Schmiermittel aufgenommen werden kann, wird in der Schmiermittelaufnahme befindliches Schmiermittel durch die Zentrifugalkraft an die Innenwand der Schmiermittelaufnahme gedrückt, wodurch der Druck steigt und das Schmiermittel in Richtung des Endes der Kurbelwelle gefördert wird. Dabei bildet sich typischer Weise innerhalb der Schmiermittelaufnahme eine Schmiermittelparabel bzw. eine paraboloidförmige Schmiermittelsäule aus.

Durch die Anbindung der Schmiermittelaufnahme am Trägerelement ist es nicht mehr notwendig, dass die Kurbelwelle über das Trägerelement vorstehen muss, um an dem überstehenden Abschnitt die Schmiermittelaufnahme befestigen zu können. Die Förderhöhe des Schmiermittels kann durch diese Maßnahme gesenkt werden, was zu einer Erhöhung der Förderleistung des Schmiermittelfördersystems führt. In anderen Worten ist die geförderte Schmiermittelmenge bezogen auf einen Zeitraum mit der erfindungsgemäßen Anbindung der Schmiermittelaufnahme an das Trägerelement höher als bei einer herkömmlichen Anbindung der Schmiermittelaufnahme an ein über das Trägerelement überstehendes Ende der Kurbelwelle.

Durch die höhere Förderleistung lässt sich auch bei geringeren Drehzahlen eine ausreichende Schmierung der Kolben-Zylinder-Einheit gewährleisten, sodass der Kältemitteverdichter möglichst energieoptimiert betrieben werden kann.

Daher ist erfindungsgemäß vorgesehen, dass auf einer der Kolben-Zylinder-Einheit abgewandten Seite des Trägerelements eine hülsenförmige Schmiermittelaufnahme zur zentrifugischen Förderung von Schmiermittel aus einem in einem Bodenbereich des Verdichtergehäuses ausgebildeten Schmiermittelsumpf in Richtung der Kolben-Zylinder-Einheit vorgesehen ist, wobei die hülsenförmige Schmiermittelaufnahme am Trägerelement drehfest angebunden ist.

Unter drehfest angebunden ist dabei zu verstehen, dass die Schmiermittelaufnahme während des Betriebs des Kältemittelverdichters gemeinsam mit der Kurbelwelle rotiert und keine Relativbewegung zwischen Schmiermittelaufnahme und Kurbelwelle auftritt. Dieser kinematische Zusammenhang lässt sich einerseits dadurch erreichen, dass Schmiermittelaufnahme und Trägerelement separate Bauteile darstellen und die Schmiermittelaufnahme drehfest, also form-, reib oder stoffschlüssig, am Trägerelement befestigt ist. Andererseits lässt sich die drehfeste Anbindung auch erreichen, wenn Trägerelement und Schmiermittelaufnahme einstückig ausgebildet sind.

In einer Ausführungsvariante der Erfindung ist vorgesehen, dass das Trägerelement eine koaxial zur Längsachse verlaufende, zentrische Durchgangsöffnung aufweist, wobei die hülsenförmige Schmiermittelaufnahme einen separaten Bauteil darstellt und ein Befestigungsabschnitt der hülsenförmigen Schmiermittelaufnahme im Bereich der Durchgangsöffnung am Trägerelement befestigt ist. Da Schmiermittelaufnahme und Trägerelement separate Bauteile darstellen, weist die hülsenförmige Schmiermittelaufnahme einen, in der Regel ebenfalls hülsenförmigen, Befestigungsabschnitt auf, über welchen die Schmiermittelaufnahme am Trägerelement drehfest, also form-, reib oder stoffschlüssig, befestigt ist. Die Befestigung des Befestigungsabschnitts der hülsenförmigen Schmiermittelaufnahme im Bereich der Durchgangsöffnung ermöglicht eine effektive Förderung des Schmiermittels von der Schmiermittelaufnahme in die parallel zu einer Längsachse der Kurbelwelle oder geneigt zur Längsachse verlaufende Bohrung, vorzugsweise die exzentrisch zur Längsachse angeordnete Exzenterbohrung, der Kurbelwelle.

Um die Qualität der drehfesten Anbindung des Trägerelements an die Kurbelwelle zu verbessern, ist in einer weiteren Ausführungsvariante der Erfindung vorgesehen, dass die Durchgangsöffnung durch einen hülsenförmigen Fortsatz des Trägerelements für die Anbindung der Kurbelwelle ausgebildet ist. Die Kurbelwelle kann dabei entweder in der vom hülsenförmigen Fortsatz des Trägerelements ausgebildeten Durchgangsöffnung aufgenommen sein oder an dem der Kolben-Zylinder-Einheit abgewandten Ende eine Ausnehmung, vorzugsweise eine Bohrung, aufweisen, in welche der hülsenförmige Fortsatz aufgenommen ist. Durch den hülsenförmigen Fortsatz, der vorzugsweise einstückig mit dem Trägerelement ausgebildet ist, vergrößert sich die Kontaktfläche zwischen Kurbelwelle und Trägerelement stark, ohne dass die Wanddicke des Trägerelements ebenfalls vergrößert werden muss. Durch die vergrößerte Kontaktfläche wird eine größere Reibkraft erzielt.

Eine besonders kostengünstige Herstellung des Trägerelements samt hülsenförmigem Fortsatz lässt sich in einer weiteren Ausführungsvariante der Erfindung dadurch erreichen, dass der hülsenförmige Fortsatz mittels eines Umformvorgangs aus dem Trägerelement ausgeformt ist. Beispielsweise kann der hülsenförmige Fortsatz des Trägerelements als durch eine im Biege- oder Tiefziehverfahren hergestellte Ausstülpung des Trägerelements hergestellt sein.

Eine bevorzugte Ausführungsvariante des erfindungsgemäßen Kältemittelverdichters sieht vor, dass sich der hülsenförmige Fortsatz auf die der Kolben-Zylinder-Einheit abgewandte Seite des Trägerelements erstreckt, ein Abschnitt der Kurbelwelle mit der Durchgangsöffnung drehfest verbunden ist und der Befestigungsabschnitt der hülsenförmigen Schmiermittelaufnahme an einer, bezogen auf die Längsachse, Außenfläche des hülsenförmigen Fortsatzes befestigt ist. Im Montagezustand ist ein Abschnitt der Kurbelwelle, vorzugsweise der der Kolben-Zylinder-Einheit abgewandte Endabschnitt der Kurbelwelle, in der Durchgangsöffnung des Trägerelements aufgenommen und drehfest verbunden. Dadurch ist die Kurbelwelle drehfest, beispielsweise kraft- oder reibschlüssig, mit dem Trägerelement verbunden. Beispielsweise kann das Trägerelement auf die Kurbelwelle aufgepresst oder aufgeschrumpft sein. Da sich der hülsenförmige Fortsatz, der die, vorzugsweise zylindrische, Durchgangsöffnung ausbildet, in die der Kolben-Zylinder-Einheit entgegengesetzte Richtung, also in anderen Worten in Richtung des Bodenbereichs des Verdichtergehäuses erstreckt, eignet er sich in besonderem Maße zur Aufnahme des Befestigungsabschnitts der Schmiermittelaufnahme. Aufgrund der Hülsenform des Fortsatzes des Trägerelements lässt sich der hülsenförmige Befestigungsabschnitt der Schmiermittelaufnahme in einfacher Art und Weise an den hülsenförmigen Fortsatz des Trägerelements anbinden. Die Schmiermittelaufnahme ist dabei außen auf den hülsenförmigen Fortsatz aufgeschoben und drehfest, vorzugsweise kraft-, reib- oder formschlüssig, mit dem hülsenförmigen Fortsatz des Trägerelements verbunden. Beispielsweise kann der Befestigungsabschnitt auf den hülsenförmigen Fortsatz aufgepresst oder aufgeschrumpft sein.

Um die Flächenpressung zwischen dem Befestigungsabschnitt der Schmiermittelaufnahme, insbesondere einer Innenfläche des Befestigungsabschnitts, und der Außenfläche des hülsenförmigen Fortsatzes des Trägerelements zu erhöhen und damit die Haltekraft des Befestigungsabschnitts am Trägerelement zu vergrößern, ist in einer weiteren besonders bevorzugten Ausführungsvariante der Erfindung vorgesehen, dass ein sich bezogen auf die Längsachse radial nach außen erstreckendes, ringförmiges Stützelement zumindest einen Abschnitt des Befestigungsabschnitts der hülsenförmigen Schmiermittelaufnahme umgibt. Durch die radiale Erstreckung des Stützrings, sprich in anderen Worten durch die Wandstärke des ringförmigen Stützelements, weist diese eine hohe Steifigkeit auf, welche eine Verformung des Befestigungsabschnitts und ein Lösen der Schmiermittelaufnahme vom hülsenförmigen Fortsatz des Trägerelements verhindert. Ein weiterer Effekt des ringförmigen Stützelements besteht darin, dass durch die erhöhte Steifigkeit bzw. die erhöhte Flächenpressung auch der Sitz und die Haltekraft des Trägerelements an der Kurbelwelle verbessert werden.

Gemäß einer weiteren bevorzugten Ausführungsvariante des erfindungsgemäßen Kältemittelverdichters ist vorgesehen, dass der Befestigungsabschnitt der hülsenförmigen Schmiermittelaufnahme zumindest abschnittsweise von dem ringförmigen Stützelement ausgebildet ist. Wenn ringförmiges Stützelement und Schmiermittelaufnahme einstückig ausgebildet sind, also das Stützelement als Querschnittsvergrößerung des Befestigungsabschnitts ausgebildet ist, ist die Montage der Schmiermittelaufnahme vereinfacht, da das Stützelement nicht separat montiert werden muss. Gleichzeitig ist die Steifigkeit des Befestigungsabschnitts durch das Stützelement erhöht, sodass die Haltekraft der Schmiermittelaufnahme am Trägerelement verbessert ist und ein Lösen der Schmiermittelaufnahme vom Trägerelement erschwert bzw. verhindert wird.

In einer weiteren bevorzugten Ausführungsvariante der Erfindung ist vorgesehen, dass das ringförmige Stützelement auf den Befestigungsabschnitt der hülsenförmigen Schmiermittelaufnahme aufgepresst oder aufgeschrumpft ist. Das aufgeschrumpfte oder aufgepresste ringförmige Stützelement übt eine radial nach innen in Richtung der Längsachse gerichtete Kraft auf eine äußere Umfangsfläche des Befestigungsabschnitts der Schmiermittelaufnahme aus, sodass die Klemmkraft bzw. die daraus resultierende Flächenpressung erhöht wird. Dadurch wird sowohl die drehfeste, reib- bzw. kraftschlüssige Anbindung des Befestigungsabschnitts an den hülsenförmigen Fortsatz des Trägerelements als auch die drehfeste, reib- bzw. kraftschlüssige Anbindung des Trägerelements an die Kurbelwelle sichergestellt.

Gemäß einer weiteren besonders bevorzugten Ausführungsvariante der Erfindung ist vorgesehen, dass sich ein Befestigungsabschnitt der hülsenförmigen Schmiermittelaufnahme parallel zur Längsachse erstreckt und dass die hülsenförmige Schmiermittelaufnahme einen an den Befestigungsabschnitt anschließenden, sich radial zur Längsachse nach außen erstreckenden Kragenabschnitt aufweist, wobei der Kragenabschnitt vorzugsweise am Trägerelement anliegt. Der Befestigungsabschnitt der Schmiermittelaufnahme erstreckt sich parallel zur Längsachse, bildet also in anderen Worten eine kreiszylindrische Hülse aus, um eine einfache Montage zu ermöglichen. Der Kragenabschnitt verhindert, dass sich die Schmiermittelaufnahme in axialer Richtung, also parallel zur Längsachse, verschiebt. Vorzugsweise wird die Verschiebung verhindert indem der Kragenabschnitt am Trägerelement anliegt. Gleichzeitig kann der Kragenabschnitt auch als Anschlag für die Montage der Schmiermittelaufnahme dienen.

Eine alternative Ausführungsvariante der Erfindung sieht vor, dass sich der hülsenförmige Fortsatz auf die der Kolben-Zylinder-Einheit zugewandte Seite des Trägerelements erstreckt, wobei der hülsenförmige Fortsatz drehfest mit der Kurbelwelle verbunden ist und dass der Befestigungsabschnitt der hülsenförmigen Schmiermittelaufnahme in der durch den hülsenförmigen Fortsatz ausgebildeten Durchgangsöffnung drehfest gehalten ist. Diese Ausführungsvariante zeichnet sich durch eine besonders kompakte Bauform aus, da der Befestigungsabschnitt der Schmiermittelaufnahme nicht außen aufgeschoben sondern in die Durchgangsöffnung eingeschoben, vorzugsweise eingepresst ist. Dabei kann die Stirnfläche des der Kolben-Zylinder-Einheit abgewandten Endes der Kurbelwelle eine Ausnehmung aufweisen, in die der hülsenförmige Fortsatz des Trägerelements eingepresst ist, um die drehfeste Verbindung zwischen Trägerelement und Kurbelwelle herzustellen.

Wie eingangs erwähnt, ist stellt auch die einstückige Ausführung von hülsenförmiger Schmiermittelaufnahme und Trägerelement eine drehfeste Anbindung dar. Daher ist in einer weiteren alternativen Ausführungsvariante der Erfindung vorgesehen, dass die hülsenförmige Schmiermittelaufnahme und das Trägerelement einstückig ausgebildet sind, wobei die Schmiermittelaufnahme mittels eines Umformvorgangs aus dem Trägerelement ausgeformt ist und dass das der Kolben-Zylinder-Einheit abgewandte Ende der Kurbelwelle in der hülsenförmigen Schmiermittelaufnahme drehfest gehalten ist. Schmiermittelaufnahme und Trägerelement können dabei aus einem plattenförmigen Rohteil mittels eines Tiefziehverfahrens hergestellt werden. Um das Ende der Kurbelwelle drehfest in der Schmiermittelaufnahme zu halten, kann das Trägerelement auf die Kurbelwelle aufgepresst oder aufgeschrumpft sein. Aufgrund der Einstückigkeit wird die Montage weitere vereinfacht, da die separate Montage der Schmiermittelaufnahme entfällt.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Schnittdarstellung einer ersten Ausführungsvariante eines erfindungsgemäßen Kältemittelverdichters;
- Fig. 2: eine vergrößerte Detaildarstellung eines Bodenbereichs des Kältemittelverdichters nach Fig. 1;
- Fig. 3: eine Schnittdarstellung eines Bodenbereichs einer zweiten Ausführungsvariante des erfindungsgemäßen Kältemittelverdichters.

### WEGE ZUR AUSFÜHRUNG DER ERFINDUNG

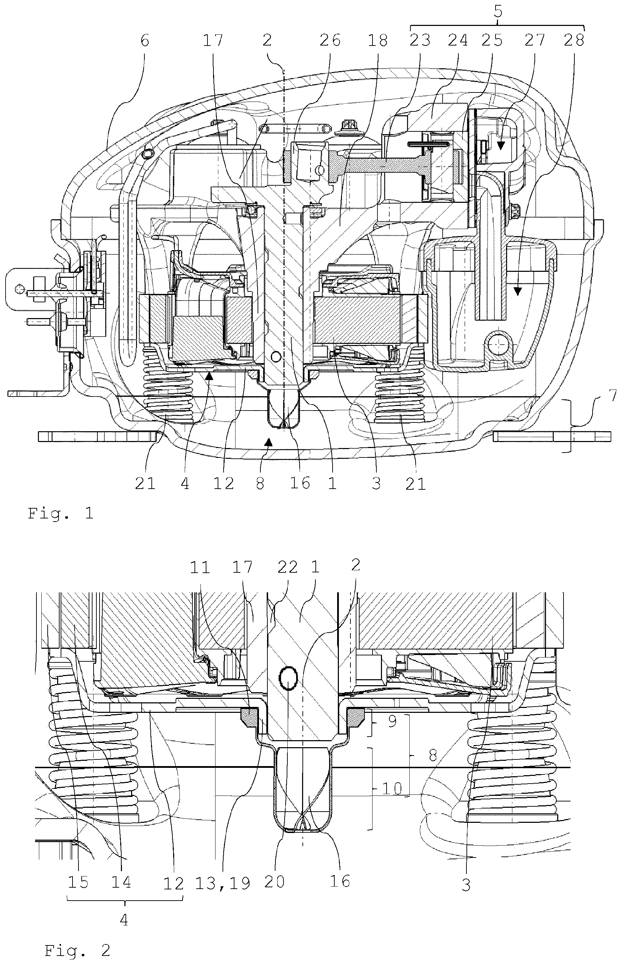

Die Figuren 1 und 2 zeigen eine erste Ausführungsvariante eines erfindungsgemäßen Kältemittelverdichters mit einer als Außenläufer ausgebildeten Antriebseinheit, welche im Inneren eines hermetisch kapselbaren Verdichtergehäuses 6 angeordnet ist. Die Antriebseinheit umfasst einen Stator 3 und einen Rotor 4. Zentrisch zu Stator 3 und Rotor 4 ist eine eine Längsachse 2 aufweisende Kurbelwelle 1 angeordnet, welche Kurbelwelle 1 drehfest, beispielsweise form-, reib oder stoffschlüssig, mit einem Trägerelement 12 des Rotors 4 verbunden ist, um eine Kältemittel taktweise verdichtende Kolben-Zylinder-Einheit 5 des Kältemittelverdichters anzutreiben. Die Kurbelwelle 1 ist in einer Lagerbuchse 17 eines die Kolben-Zylinder-Einheit 5 tragenden Trägergehäuses 18 gelagert. An der Außenseite der Lagerbuchse 17 ist der Stator 3 befestigt, welcher in radialer Richtung bezogen auf die Längsachse 2, in der Folge auch als Radialrichtung bezeichnet, innen angeordnet ist.

Die Kurbelwelle 1 ist Teil eines Kurbeltriebs, welcher Kurbeltrieb einen exzentrisch zur Längsachse 2 versetzten und direkt mit der Kurbelwelle 1 verbundenen Kurbelzapfen 26 aufweist. Die Kolben-Zylinder-Einheit 5 umfasst einen Kolben 25 welcher in einem Zylindergehäuse 24 linear bewegbar geführt ist, ein den Kurbelzapfen 26 mit dem Kolben 25 verbindendes Pleuel 23, eine Ventile umfassende Zylinderkopfanordnung 27 und einen mit der Zylinderkopfanordnung 27 verbundenen Saugschalldämpfer 28.

Im vorliegenden Ausführungsbeispiel sind das Trägergehäuse 18 und das Zylindergehäuse 24 einstückig, genauer als Gussteil, ausgebildet. Das Trägergehäuse 18 weist mehrere Fortsätze auf, über welche das Trägergehäuse 18 an in einem Bodenbereich 7 des Verdichtergehäuses 6 angeordneten Federelementen 21 im Verdichtergehäuse 6 gelagert ist. In alternativen Ausführungsvarianten können Trägergehäuse 18 und Zylindergehäuse 24 zweistückig ausgebildet sein und über Verbindungsmittel miteinander verbunden sein.

Der Rotor 4 umfasst, wie in Figur 2 dargestellt, eine Mehrzahl an Permanentmagneten 14 welche in Radialrichtung außerhalb des Stators 3 angeordnet sind und über einen Kurzschlussring 15 miteinander in Umfangsrichtung verbunden sind. Um die Permanentmagnete 14 mit der Kurbelwelle 1 mittels Kraft- bzw. Reibschluss drehfest zu verbinden, umfasst der Rotor 4 das sich radial von der Kurbelwelle 1 nach außen erstreckende Trägerelement 12, welches den Stator 3 untergreift. Das Trägerelement 12 ist im Wesentlichen tellerförmig ausgebildet und weist einen erhöhten, in Richtung der Kolben-Zylinder-Einheit 5 gewölbten Randabschnitt auf, an welchem die Permanentmagnete 14 und der Kurzschlussring 15 befestigt sind. Zur Verbindung mit der Kurbelwelle 1 weist das Trägerelement 12 eine zentrisch angeordnete Durchgangsöffnung 13 auf, um den Rotor 4 koaxial zur Längsachse 2 zu positionieren. Das Trägerelement 12 weist in den vorliegenden Ausführungsbeispielen einen hülsenförmigen Fortsatz 19 mit kreiszylindrischem lichtem Querschnitt auf, welcher zentrisch angeordnet ist und sich auf die der Kolben-Zylinder-Einheit 5 abgewandte Seite des Trägerelements 12 erstreckt. Die Durchgangsöffnung 13 ist dabei durch den Fortsatz 19 ausgebildet. Trägerelement 12 und Fortsatz 19 sind im vorliegenden Ausführungsbeispiel einstückig ausgebildet, wobei der Fortsatz 19 und der Randabschnitt mittels eines Umformverfahrens, beispielsweise mittels eines Tiefziehverfahrens, aus dem Trägerelement 12 ausgeformt ist. Das untere Ende der Kurbelwelle 1 ist dabei im vorliegenden Ausführungsbeispiel in die Durchgangsöffnung 13 eingepresst, um die drehfeste Verbindung von Trägerelement 12 und Kurbelwelle 1 herzustellen.

Um die Lagerstellen der Kurbelwelle 1 in der Lagerbuchse 17 und die Kolben-Zylinder-Einheit 5 in einem Betriebszustand des Kältemittelverdichters zu schmieren und mit Schmiermittel aus einem im Betriebszustand im Bodenbereich 7 des Verdichtergehäuses 6 ausgebildeten Schmiermittelsumpf zu versorgen, weist die Kurbelwelle 1 an dem der Kolben-Zylinder-Einheit 5 gegenüberliegenden Ende, sprich am unteren Ende, eine geneigt zur Längsachse 2 verlaufenden, sprich eine im Wesentlichen axial verlaufende, Exzenterbohrung (nicht dargestellt) auf, welche in Radialrichtung exzentrisch zur Längsachse 2 angeordnet ist. Schmiermittel welches in die Exzenterbohrung gelangt wird aufgrund der Zentrifugalkraft bei der Rotation der Kurbelwelle 1 an die Wand der Exzenterbohrung gedrückt und aufgrund des erhöhten Drucks in Richtung der Kolben-Zylinder-Einheit 5 gefördert. Beispielsweise kann die Exzenterbohrung als Sacklochbohrung ausgeführt und an dem der Kolben-Zylinder-Einheit 5 zugewandten Ende über eine Radialbohrung 20 mit einer an der Umfangsfläche der Kurbelwelle 1 ausgebildeten Wendelnut 22 zur Förderung des Schmiermittels verbunden.

In alternativen Ausführungsvarianten kann die Exzenterbohrung auch parallel zur Längsachse 2 verlaufend angeordnet sein oder statt der Exzenterbohrung kann eine koaxial zur Längsachse 2 verlaufende axiale Bohrung vorgesehen sein.

Um nun Schmiermittel aus dem Schmiermittelsumpf in die Exzenterbohrung der Kurbelwelle 1 zu bringen ohne dass ein freies Ende der Kurbelwelle 1 in den Schmiermittelsumpf eintauchen muss, ist eine hülsenförmige Schmiermittelaufnahme 8 vorgesehen, welche am Trägerelement 12 befestigt und somit drehfest an der Kurbelwelle 1 angebunden ist. Das untere Ende der Kurbelwelle 1 ist dabei in die Durchgangsöffnung 13 des Fortsatzes 19 des Trägerelements 12 eingepresst. Im vorliegenden Ausführungsbeispiel sind die hülsenförmige Schmiermittelaufnahme 8 und das Trägerelement 12 zweiteilig ausgebildet, wobei ein Befestigungsabschnitt 9 der Schmiermittelaufnahme 8 den Fortsatz 19 des Trägerelements 12 kontaktiert.

Wie in Figur 2 gut zu erkennen ist, weist der Befestigungsabschnitt 9 einen kreiszylindrischen lichten Querschnitt auf, wobei eine Innenfläche des Befestigungsabschnitts 9 an einer Außenfläche des hülsenförmigen Fortsatzes 19 des Trägerelements 12 anliegt. In anderen Worten ist der Befestigungsabschnitt 9 der hülsenförmigen Schmiermittelaufnahme 8 auf den Fortsatz 19 aufgeschoben. Um eine drehfeste Verbindung zwischen Schmiermittelaufnahme 8 und Trägerelement 12 herzustellen, ist der Befestigungsabschnitt 9 in der Regel auf den Fortsatz 19 des Trägerelements 12 aufgepresst oder aufgeschrumpft, sodass eine kraftschlüssige bzw. reibschlüssige Verbindung hergestellt ist.

Um einerseits die Anbindung des Trägerelements 12 an die Kurbelwelle 1 und andererseits die Anbindung des Befestigungsabschnitts 9 an den Fortsatz 19 zu verbessern und die Flächenpressung zwischen Trägerelement 12 und Befestigungsabschnitt 9 bzw. zwischen Befestigungsabschnitt 9 und Kurbelwelle 1 zu erhöhen, ist ein Abschnitt des Befestigungsabschnitts 9 als ringförmiges Stützelement 11 ausgebildet. Dabei handelt es sich im vorliegenden Ausführungsbeispiel um das dem Trägerelement 12 zugewandte Ende des Befestigungsabschnitts, wobei sich das ringförmige Stützelement 11 über etwa 80% des Befestigungsabschnitts 9 in Axialrichtung gesehen erstreckt. Das ringförmige Stützelement 11 weist im Vergleich zur übrigen Schmiermittelaufnahme 8 eine sehr hohe Wandstärke auf, sodass der Befestigungsabschnitt 9 im Bereich des Stützelements 11 eine hohe Steifigkeit aufweist. Dadurch ist ein sicherer Halt des Befestigungsabschnitts 9 am Fortsatz 19 gewährleistet.

In alternativen Ausführungsvarianten kann das ringförmige Stützelement 11 auch ein von der Schmiermittelaufnahme 8 separates Teil darstellen, welches außen auf den Befestigungsabschnitt 9 aufgepresst oder aufgeschrumpft ist. In anderen Worten kontaktiert das Stützelement 11 eine äußere Umfangsfläche des Befestigungsabschnitts 9 und übt eine radial nach innen in Richtung der Längsachse 2 gerichtete Kraft auf den Befestigungsabschnitt 9 aus. Durch diese Kraft erhöhen sich die Flächenpressung und die Qualität der kraft- bzw. reibschlüssigen Verbindung zwischen der Innenfläche der Durchgangsöffnung 13 und der Kurbelwelle bzw. zwischen der Innenfläche des Befestigungsabschnitts 9 und der Außenfläche des Fortsatzes 19. Das Stützelement 11 kontaktiert dabei eine Unterseite des Trägerelements 12 und überlappt etwa 80% des Fortsatzes 19.

Es versteht sich dabei von selbst, dass das ringförmige Stützelement 11 für die Befestigung der Schmiermittelaufnahme 8 am Fortsatz 19 zwar vorteilhaft ist, jedoch nicht unbedingt notwendig ist. Alternativ oder zusätzlich zum Stützelement 11 kann der oberste Abschnitt der Schmiermittelaufnahme 8 auch einen Kragenabschnitt aufweisen, der sich zumindest abschnittsweise in radialer Richtung nach außen erstreckt.

Über eine Schmiermitteleintrittsöffnung tritt Schmiermittel in einen Aufnahmeabschnitt 10 der Schmiermittelaufnahme 8 ein. Da die Schmiermittelaufnahme 8 eine rotationssymmetrische Form bezogen auf die Längsachse 2 aufweist und koaxial zur Längsachse 2 angeordnet ist, bildet sich durch die Rotation der Schmiermittelaufnahme 8 eine Schmiermittelparabel bzw. eine paraboloidförmige Schmiermittelsäule in der Schmiermittelaufnahme 8 aus, welche am unteren Ende der Kurbelwelle 1 in die Exzenterbohrung übertritt und dort weiter in Richtung der ersten Radialbohrung 20 gefördert wird.

Mit zunehmendem Abstand zwischen einem Spiegel des Schmiermittelsumpfs und Radialbohrung 20, auch als Förderhöhe bezeichnet, sinkt die Förderleistung des Schmiermittel-Fördersystems. Durch die Befestigung der Schmiermittelaufnahme 8 an dem hülsenförmigen Fortsatz 19 des Trägerelements wird eine besonders platzsparende Anbindung der Schmiermittelaufnahme 8 an die Kurbelwelle 1 erreicht, wodurch die Förderhöhe gesenkt werden kann und damit die Förderleistung, also der Schmiermitteldurchsatz pro Minute, gesteigert werden kann. Die Steigerung der Förderleistung lässt sich dadurch erklären, dass aufgrund der geringeren Förderhöhe die Wandstärke der Schmiermittelparabel im Bereich der Radialbohrung 20 größer ist und damit mehr Schmiermittel in die Wendelnut 22 gelangt.

In einer nicht dargestellten alternativen Ausführungsvariante der Erfindung ist vorgesehen, dass Schmiermittelaufnahme 8 und Trägerelement 12 einstückig ausgebildet sind und die Schmiermittelaufnahme 8 dadurch drehfest an das Trägerelement 12 bzw. an die Kurbelwelle 1 angebunden ist. Die Einstückigkeit kann beispielsweise dadurch erreicht werden, dass das Trägerelement 12 samt Schmiermittelaufnahme 8 in einem Tiefziehverfahren aus einem plattenförmigen Rohzuschnitt hergestellt wird. In dieser Ausführungsvariante ist das untere Ende der Kurbelwelle 1 in einen oberen Abschnitt der Schmiermittelaufnahme 8 eingepresst oder ist die Schmiermittelaufnahme 8 auf das untere Ende der Kurbelwelle 1 aufgeschrumpft.

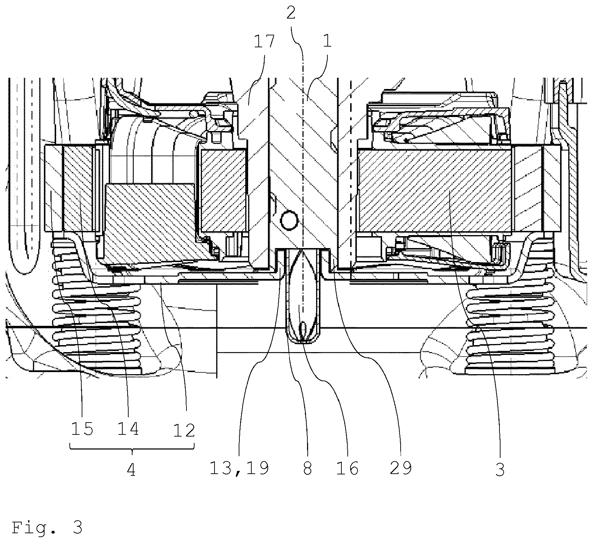

Figur 3 zeigt eine zweite Ausführungsvariante der Erfindung, welche sich in einzelnen Aspekten von der ersten Ausführungsvariante unterscheidet, weshalb in der Folge nur auf die Unterschiede eingegangen wird.

Während sich der hülsenförmige Fortsatz 19 des Trägerelements 12 in der ersten Ausführungsvariante auf die der Kolben-Zylinder-Einheit 5 abgewandte Seite erstreckt, erstreckt sich der Fortsatz 19 im vorliegenden Ausführungsbeispiel in Richtung der Kolben-Zylinder-Einheit 5 (vergleiche Fig. 1). In anderen Worten ist der Fortsatz 19 im vorliegenden Ausführungsbeispiel nach oben ausgewölbt. Der Fortsatz 19 wiederum einstückig mit dem Trägerelement 12 ausgebildet und kann mittels eines Biege- oder Tiefziehverfahrens hergestellt werden. Im ersten Ausführungsbeispiel ist das untere Ende der Kurbelwelle 1 in der durch den hülsenförmigen Fortsatz 19 des Trägerelements 12 ausgebildeten Durchgangsöffnung 13 angeordnet. Im zweiten Ausführungsbeispiel weist die Stirnseite des unteren Endes der Kurbelwelle 1 eine zentrische Ausnehmung 29 auf, in welcher Ausnehmung 29 der hülsenförmige Fortsatz 19 drehfest gehalten ist. Beispielsweise kann der Fortsatz 19 in die Ausnehmung 29 eingepresst sein. Die Schmiermittelaufnahme 8 ist dabei in der Durchgangsöffnung 13 drehfest gehalten. Auch dies kann beispielsweise durch Einpressen der Schmiermittelaufnahme 8 in die Durchgangsöffnung 13 bewerkstelligt werden.

In der Schmiermittelaufnahme 8 kann des Weiteren ein Schmiermittelmitnehmer 16 angeordnet sein, welcher die Ausbildung der Schmiermittelparabel unterstützt und die Förderleistung der Ölfördereinrichtung erhöht. Daher ist in jedem der zuvor beschriebenen Ausführungsbeispiele ein Schmiermittelmitnehmer 16 in der Schmiermittelaufnahme 8 angeordnet, welcher zumindest eine oder mehrere schraubenförmige Flächen aufweist, welche das Schmiermittel nach außen in Richtung der Innenwand der Schmiermittelaufnahme 8 drängen bzw. zur Drängung des Schmiermittels in axialer Richtung nach oben in Richtung der Exzenterbohrung der Kurbelwelle 1 ausgebildet sind. Es ist auch denkbar, dass die eine oder mehreren Flächen des Schmiermittelmitnehmers 16 planar ausgebildet sind.

### BEZUGSZEICHENLISTE

- 1: Kurbelwelle
- 2: Längsachse der Kurbelwelle 1
- 3: Stator
- 4: Rotor
- 5: Kolben-Zylinder-Einheit
- 6: Verdichtergehäuse
- 7: Bodenbereich des Verdichtergehäuses 6
- 8: hülsenförmige Schmiermittelaufnahme
- 9: Befestigungsabschnitt der Schmiermittelaufnahme 8
- 10: Aufnahmeabschnitt der Schmiermittelaufnahme 8
- 11: ringförmiges Stützelement
- 12: Trägerelement des Rotors 4
- 13: Durchgangsöffnung
- 14: Permanentmagnet
- 15: Kurzschlussring
- 16: Schmiermittelmitnehmer
- 17: Lagerbuchse
- 18: Trägergehäuse
- 19: hülsenförmiger Fortsatz des Trägerelements 12
- 20: Radialbohrung
- 21: Federelement
- 22: Wendelnut
- 23: Pleuel
- 24: Zylindergehäuse
- 25: Kolben
- 26: Kurbelzapfen
- 27: Zylinderkopfanordnung
- 28: Saugschalldämpfer
- 29: Ausnehmung der Kurbelwelle 1

## Patentansprüche

1. Kältemittelverdichter mit
- einem, vorzugsweise hermetisch abdichtbaren, Verdichtergehäuse (6);
- einer elektrischen Antriebseinheit umfassend einen Rotor (4) und einen Stator (3);
- einer mit dem Rotor (4) drehfest verbundenen, eine Längsachse (2) aufweisenden Kurbelwelle (1);
- einer von der Kurbelwelle (1) antreibbaren Kolben-Zylinder-Einheit (5);
wobei die elektrische Antriebseinheit als Außenläufermotor ausgebildet ist und der Rotor (4) ein sich zumindest abschnittsweise radial zur Längsachse (2) nach außen erstreckendes Trägerelement (12) aufweist und das Trägerelement (12) drehfest an der Kurbelwelle (1) angebunden ist,
**dadurch gekennzeichnet, dass**
auf einer der Kolben-Zylinder-Einheit (5) abgewandten Seite des Trägerelements (12) eine hülsenförmige Schmiermittelaufnahme (8) zur zentrifugischen Förderung von Schmiermittel aus einem in einem Bodenbereich (7) des Verdichtergehäuses (6) ausgebildeten Schmiermittelsumpf in Richtung der Kolben-Zylinder-Einheit (5) vorgesehen ist, wobei die hülsenförmige Schmiermittelaufnahme (8) am Trägerelement (12) drehfest angebunden ist.

2. Kältemittelverdichter nach Anspruch 1, **dadurch gekennzeichnet, dass** das Trägerelement (12) eine koaxial zur Längsachse (2) verlaufende, zentrische Durchgangsöffnung (13) aufweist, wobei die hülsenförmige Schmiermittelaufnahme (8) einen separaten Bauteil darstellt und ein Befestigungsabschnitt (9) der hülsenförmigen Schmiermittelaufnahme (8) im Bereich der Durchgangsöffnung (13) am Trägerelement (12) befestigt ist.

3. Kältemittelverdichter nach Anspruch 2, **dadurch gekennzeichnet, dass** die Durchgangsöffnung (13) durch einen hülsenförmigen Fortsatz (19) des Trägerelements (12) für die Anbindung der Kurbelwelle (1) ausgebildet ist, wobei der hülsenförmige Fortsatz (19) vorzugsweise mittels eines Umformvorgangs aus dem Trägerelement (12) ausgeformt ist.

4. Kältemittelverdichter nach einem der Ansprüche 1 bis 3, **dadurch gekennzeichnet, dass** sich der hülsenförmige Fortsatz (19) auf die der Kolben-Zylinder-Einheit (5) abgewandte Seite des Trägerelements (12) erstreckt, ein Abschnitt der Kurbelwelle (1) mit der Durchgangsöffnung (13) drehfest verbunden ist und der Befestigungsabschnitt (9) der hülsenförmigen Schmiermittelaufnahme (8) an einer, bezogen auf die Längsachse (2), Außenfläche des hülsenförmigen Fortsatzes (19) befestigt ist.

5. Kältemittelverdichter nach Anspruch 4, **dadurch gekennzeichnet, dass** ein sich bezogen auf die Längsachse (2) radial nach außen erstreckendes, ringförmiges Stützelement (11) zumindest einen Abschnitt des Befestigungsabschnitts (9) der hülsenförmigen Schmiermittelaufnahme (8) umgibt.

6. Kältemittelverdichter nach Anspruch 5, **dadurch gekennzeichnet, dass** der Befestigungsabschnitt (9) der hülsenförmigen Schmiermittelaufnahme (8) zumindest abschnittsweise von dem ringförmigen Stützelement (11) ausgebildet ist.

7. Kältemittelverdichter nach Anspruch 5, **dadurch gekennzeichnet, dass** das ringförmige Stützelement (11) auf den Befestigungsabschnitt (9) der hülsenförmigen Schmiermittelaufnahme (8) aufgepresst oder aufgeschrumpft ist.

8. Kältemittelverdichter nach Anspruch einem der Ansprüche 1 bis 7, **dadurch gekennzeichnet, dass** sich ein Befestigungsabschnitt (9) der hülsenförmigen Schmiermittelaufnahme (8) parallel zur Längsachse (2) erstreckt und
dass die hülsenförmige Schmiermittelaufnahme (8) einen an den Befestigungsabschnitt (9) anschließenden, sich radial zur Längsachse (2) nach außen erstreckenden Kragenabschnitt aufweist, wobei der Kragenabschnitt vorzugsweise am Trägerelement (12) anliegt.

9. Kältemittelverdichter nach Anspruch 3, **dadurch gekennzeichnet, dass** sich der hülsenförmige Fortsatz (19) auf die der Kolben-Zylinder-Einheit (5) zugewandte Seite des Trägerelements (12) erstreckt,
wobei der hülsenförmige Fortsatz (19) drehfest mit der Kurbelwelle (1) verbunden ist,
und dass der Befestigungsabschnitt (9) der hülsenförmigen Schmiermittelaufnahme (8) in der durch den hülsenförmigen Fortsatz (19) ausgebildeten Durchgangsöffnung (13) drehfest gehalten ist.

10. Kältemittelverdichter nach Anspruch 1, **dadurch gekennzeichnet, dass** die hülsenförmige Schmiermittelaufnahme (8) und das Trägerelement (12) einstückig ausgebildet sind, wobei die Schmiermittelaufnahme (8) mittels eines Umformvorgangs aus dem Trägerelement (12) ausgeformt ist
und dass das der Kolben-Zylinder-Einheit (5) abgewandte Ende der Kurbelwelle (1) in der hülsenförmigen Schmiermittelaufnahme (8) drehfest gehalten ist.

## Claims

1. Refrigerant compressor, comprising
- a, preferably hermetically sealable, compressor housing (6);
- an electric drive unit having a rotor (4) and a stator (3);
- a crankshaft (1) which is connected in a rotationally fixed manner to the rotor (4) and which has a longitudinal axis (2);
- a piston-cylinder unit (5) drivable by the crankshaft (1);
wherein the electric drive unit is designed as an external-rotor motor and the rotor (4) comprises a carrier element (12) extending outwards at least in sections radially with respect to the longitudinal axis (2), and the carrier element (12) is connected in a rotationally fixed manner to the crankshaft (1), **characterized in that**
a sleeve-shaped lubricant receptacle (8) for centrifugally conveying lubricant from a lubricant sump formed in a bottom region (7) of the compressor housing (6) in the direction of the piston-cylinder unit (5) is provided on a side of the carrier element (12) facing away from the piston-cylinder unit (5), wherein the sleeve-shaped lubricant receptacle (8) is connected to the carrier element (12) in a rotationally fixed manner.

2. Refrigerant compressor according to claim 1, **characterized in that** the carrier element (12) comprises a central through-opening (13) extending coaxially with the longitudinal axis (2), wherein the sleeve-shaped lubricant receptacle (8) constitutes a separate component and a fastening section (9) of the sleeve-shaped lubricant receptacle (8) is fastened to the carrier element (12) in the region of the through-opening (13).

3. Refrigerant compressor according to claim 2, **characterized in that** the through-opening (13) is formed by a sleeve-shaped extension (19) of the carrier element (12) for the connection of the crankshaft (1), wherein the sleeve-shaped extension (19) is preferably formed from the carrier element (12) by means of a forming operation.

4. Refrigerant compressor according to one of claims 1 to 3, **characterized in that** the sleeve-shaped extension (19) extends on the side of the carrier element (12) facing away from the piston-cylinder unit (5), a section of the crankshaft (1) is connected to the through-opening (13) in a rotationally fixed manner, and the fastening section (9) of the sleeve-shaped lubricant receptacle (8) is fastened to an outer surface, relative to the longitudinal axis (2), of the sleeve-shaped extension (19).

5. Refrigerant compressor according to claim 4, **characterized in that** an annular support element (11) extending radially outward with respect to the longitudinal axis (2) surrounds at least a section of the fastening section (9) of the sleeve-shaped lubricant receptacle (8).

6. Refrigerant compressor according to claim 5, **characterized in that** the fastening section (9) of the sleeve-shaped lubricant receptacle (8) is formed at least in sections by the annular support element (11).

7. Refrigerant compressor according to claim 5, **characterized in that** the annular support element (11) is pressed or shrunk onto the fastening section (9) of the sleeve-shaped lubricant receptacle (8).

8. Refrigerant compressor according to one of claims 1 to 7, **characterized in that** a fastening section (9) of the sleeve-shaped lubricant receptacle (8) extends parallel to the longitudinal axis (2), and
**in that** the sleeve-shaped lubricant receptacle (8) has a collar section adjoining the fastening section (9) and extending radially outwardly with respect to the longitudinal axis (2), wherein the collar section preferably rests against the carrier element (12).

9. Refrigerant compressor according to claim 3, **characterized in that** the sleeve-shaped extension (19) extends on the side of the carrier element (12) facing the piston-cylinder unit (5),
wherein the sleeve-shaped extension (19) is connected to the crankshaft (1) in a rotationally fixed manner,
and **in that** the fastening section (9) of the sleeve-shaped lubricant receptacle (8) is held in a rotationally fixed manner in the through-opening (13) formed by the sleeve-shaped extension (19).

10. Refrigerant compressor according to claim 1, **characterized in that** the sleeve-shaped lubricant receptacle (8) and the carrier element (12) are integrally formed, wherein the lubricant receptacle (8) is formed from the carrier element (12) by means of a forming process,
and **in that** the end of the crankshaft (1) facing away from the piston-cylinder unit (5) is held in a rotationally fixed manner in the sleeve-shaped lubricant receptacle (8).

## Revendications

1. Compresseur de réfrigérant avec
- un carter de compresseur (6) pouvant de préférence être fermé hermétiquement ;
- une unité d'entraînement électrique comprenant un rotor (4) et un stator (3) ;
- un vilebrequin (1) présentant un axe longitudinal (2) et relié de manière solidaire en rotation avec le rotor (4) ;
- une unité de vérin (5) pouvant être entraînée par le vilebrequin (1) ;
dans lequel l'unité d'entraînement électrique est conformée comme un moteur à rotor externe et le rotor (4) présente un élément de support (12) qui s'étend au moins par sections dans le sens radial par rapport à l'axe longitudinal (2) et l'élément de support (12) est relié de façon solidaire en rotation au vilebrequin (1),
**caractérisé en ce qu'**un réceptacle à lubrifiant en forme de douille (8) est prévu sur un côté de l'élément de support (12) tourné à l'opposé de l'unité de vérin (5) pour le transport centrifuge de lubrifiant d'un bac à lubrifiant formé dans une partie de fond (7) du carter de compresseur (6) vers l'unité de vérin (5), le réceptacle à lubrifiant en forme de douille (8) étant relié à l'élément de support (12) de manière solidaire en rotation.

2. Compresseur de réfrigérant selon la revendication 1, **caractérisé en ce que** l'élément de support (12) présente une ouverture de passage (13) centrée et coaxiale par rapport à l'axe longitudinal (2), le réceptacle à lubrifiant en forme de douille (8) formant une partie séparée et une partie de fixation (9) du réceptacle à lubrifiant en forme de douille (8) étant fixée sur l'élément de support (12) au niveau de l'ouverture de passage (13).

3. Compresseur de réfrigérant selon la revendication 2, **caractérisé en ce que** l'ouverture de passage (13) est formée par une saillie en forme de douille (19) de l'élément de support (12) en vue de la liaison du vilebrequin (1), la saillie en forme de douille (19) étant de préférence formée à partir de l'élément de support (12) au moyen d'un procédé de formage.

4. Compresseur de réfrigérant selon l'une des revendications 1 à 3, **caractérisé en ce que** la saillie en forme de douille (19) s'étend sur le côté de l'élément de support (12) orienté à l'opposé del'unité de vérin (5), une section du vilebrequin (1) est reliée de façon solidaire en rotation à l'ouverture de passage (13) et la partie de fixation (9) du réceptacle à lubrifiant en forme de douille (8) est fixée sur une surface extérieure, par rapport à l'axe longitudinal (2), de la saillie en forme de douille (19).

5. Compresseur de réfrigérant selon la revendication 4, **caractérisé en ce qu'**un élément d'appui annulaire (11), s'étendant dans le sens radial vers l'extérieur par rapport à l'axe longitudinal (2), entoure au moins une section de la partie de fixation (9) du réceptacle à lubrifiant en forme de douille (8).

6. Compresseur de réfrigérant selon la revendication 5, **caractérisé en ce que** la partie de fixation (9) du réceptacle à lubrifiant en forme de douille (8) est formée au moins en partie par l'élément d'appui annulaire (11).

7. Compresseur de réfrigérant selon la revendication 5, **caractérisé en ce que** l'élément d'appui annulaire (11) est calé à la presse ou fretté sur la partie de fixation (9) du réceptacle à lubrifiant en forme de douille (8).

8. Compresseur de réfrigérant selon l'une des revendications 1 à 7, **caractérisé en ce qu'**une partie de fixation (9) du réceptacle à lubrifiant en forme de douille (8) s'étend parallèlement à l'axe longitudinal (2) et
**en ce que** le réceptacle à lubrifiant en forme de douille (8) présente une partie de collet qui se raccorde à la partie de fixation (9) et s'étend vers l'extérieur dans le sens radial par rapport à l'axe longitudinal (2), laquelle partie de collet repose de préférence sur l'élément de support (12).

9. Compresseur de réfrigérant selon la revendication 3, **caractérisé en ce que** la saillie en forme de douille (19) s'étend sur le côté de l'élément de support (12) tourné vers l'unité de vérin (5),
la saillie en forme de douille (19) étant reliée au vilebrequin (1) de manière solidaire en rotation,
et **en ce que** la partie de fixation (9) du réceptacle à lubrifiant en forme de douille (8) est retenue de manière solidaire en rotation par l'ouverture de passage (13) formée par la saillie en forme de douille (19).

10. Compresseur de réfrigérant selon la revendication 1, **caractérisé en ce que** le réceptacle à lubrifiant en forme de douille (8) et l'élément de support (12) sont formés d'une pièce, le réceptacle à lubrifiant (8) étant formé à partir de l'élément de support (12) au moyen d'un procédé de formage,
et **en ce que** l'extrémité du vilebrequin (1) orientée à l'opposé de l'unité de vérin (5) est retenue de façon solidaire en rotation dans le réceptacle à lubrifiant en forme de douille (8).
